# DEMANDE DE BREVET EUROPEEN

(11) **EP 1 494 147 A1**
(43) Date de publication de la demande: **05.01.2005**
(21) Numéro de dépôt: 04291639.5
(22) Date de dépôt: 29.06.2004
(51) Int. Cl.: G06F 17/30

(54) **Procédé de visualisation d'informations accessibles par l'intermédiaire d'un réseau de télécommunications, serveur et programme pour sa mise en oeuvre**

(30) Priorité: 01.07.2003 FR 0307964
(71) Demandeur: FRANCE TELECOM, 75015 Paris (FR)
(72) Inventeur: Ortholand, Jean-Michel, 38760 Saint-Paul de Varces (FR); Grattard, Gilles, 38610 Gieres (FR)
(74) Mandataire: Loisel, Bertrand

(57) **Abrégé**

Dans une phase de configuration, un utilisateur fournit des données d'identification et des données de spécification de zones de sites Web qu'il sélectionne. Une phase d'extraction est ensuite exécutée pour consulter les zones de sites spécifiées par l'intermédiaire du réseau (11) pour extraire les informations contenues dans ces zones. Ces informations sont exploitées pour construire une zone de visualisation dans une page associée à l'utilisateur, où les informations extraites sont affichées sous forme agrégée.

## Description

La présente invention concerne les techniques d'accès à des informations par l'intermédiaire de réseaux, et particulièrement à des informations mises à disposition sur des sites Web.

Le Web est un système bien connu par lequel des sites mettent à disposition d'utilisateurs des informations accessibles via Internet ou un Intranet. Souvent, ces informations hébergées par les sites sont organisées en pages écrites dans un langage de description approprié tel que HTML ("Hypertext Markup Language") ou en fichiers. Elles peuvent être consultées par les utilisateurs au moyen de logiciels appelés navigateurs mettant en oeuvre des protocoles de transfert appropriés tels que HTTP ("Hypertext Transfer Protocol") ou FTP ("File Transfer Protocol") ainsi que divers types d'interface homme-machine (IHM) pour la présentation aux utilisateurs.

Les outils du Web sont bien connus et sont notamment décrits dans les documents normatifs de l'IETF ("Internet Engineering Task Force") et du W3C ("World Wide Web Consortium").

Une page HTML comporte des données délimitées par des marqueurs ("tags"). Les marqueurs se rapportent à des commandes pour la présentation des informations de la page: par exemple le marqueur <P> indique un nouveau paragraphe, le marqueur <B> indique que le texte qui suit (jusqu'au marqueur de fin </B>) est à afficher en caractères gras, etc. D'autres marqueurs se rapportent à des commandes liées à des actions à exécuter par le navigateur: par exemple le marqueur <A HREF="url"> représente un lien indiquant que le texte qui suit (jusqu'au marqueur de fin </A>) est à afficher comme une zone de commande qui, en réponse à une action de l'utilisateur (souvent un clic de souris), provoque le chargement d'une autre page stockée à l'adresse url écrite au format des URL ("Uniform Resource Locator", par exemple http://www.francetelecom.com/).

Les données délimitées par les marqueurs représentent de l'information sémantique à délivrer à l'utilisateur. Ces données sont présentées avec des attributs graphiques contrôlés par les marqueurs, plus ou moins sophistiqués selon les capacités du navigateur et de la plate-forme où il s'exécute.

Certains procédés permettent aujourd'hui de notifier, à un utilisateur qui le demande, l'apparition d'une nouvelle information sur un site Web donné (actualités, nouveau produit, franchissement d'un seuil, etc.).

Ces procédés impliquent le développement, par le gestionnaire du site, d'une fonctionnalité qui scrute les données concernées, contenues dans des bases de données, dans des fichiers, ou directement dans une page HTML. Sur détection d'un changement spécifié (nouvelles données, franchissement d'un seuil, ...), cette fonctionnalité appelle un mécanisme de diffusion (envoi d'e-mail, SMS, ...).

Des produits comme le logiciel "News Interceptor" de la société Digital Dream (voir http://www.newsinterceptor.com/) permettent une notification, via un programme spécifique installé sur un ordinateur personnel (PC), de l'arrivée d'informations sur une liste de sites spécifique, définie par le fournisseur de ce logiciel. L'appartenance d'un site à cette liste suppose l'accord préalable du gestionnaire de ce site.

Avec les méthodes ci-dessus, l'utilisateur final d'Internet reçoit des notifications au coup par coup lorsque des changements déterminés interviennent sur les sites surveillés. Il n'accède pas à une vue synthétique de l'ensemble des informations souhaitées. En outre, il ne peut pas se faire notifier une information issue d'un site quelconque de son choix, quand la fonctionnalité de notification n'est offerte ni par le gestionnaire du site, ni par des fournisseurs de produits tels que News Interceptor.

Le concept de logiciel décrit dans Sugiura, et al., "Internet Scrapbook: Automating Web Browsing Tasks by Demonstration", ACM Symposium UIST'98, San Francisco, 1-4 novembre 1998, pages 9-18, permet depuis un poste d'utilisateur de composer des pages Web personnalisées à partir d'informations accessibles sur divers sites. Pour bénéficier d'une large diffusion, un tel logiciel doit être compatible avec le plus grand nombre de navigateurs Web, ce qui alourdit considérablement son développement. Il semble d'ailleurs que le développement d'un tel logiciel n'ait pas été mené à bien à ce jour.

Un but de la présente invention est de pallier ces différentes limitations des techniques existantes.

L'invention propose ainsi un procédé de visualisation d'informations accessibles sur au moins un site par l'intermédiaire d'un réseau de télécommunications, tel que défini dans la revendication 1.

Ces dispositions permettent à un utilisateur final d'internet ou à un webmaster, de sélectionner une zone d'un ou plusieurs sites Web, et de centraliser l'ensemble de ces informations sur une page Internet unique, avec pour avantages:
- un gain de temps pour l'utilisateur final, qui n'a besoin de consulter qu'une seule page pour être au courant des informations apparues sur différents sites Web;
- une liberté complète de l'utilisateur, qui peut choisir n'importe quel site Internet, indépendamment des fonctionnalités qu'il offre ou des accords de partenariat qu'il possède avec des fournisseurs tels que News intercepter;
- une facilité pour le webmaster souhaitant inclure sur son site des informations provenant d'un autre site.

Le procédé de visualisation d'informations sera généralement exécuté sous le contrôle d'un programme installé dans un ordinateur raccordé au réseau de télécommunications. Cet ordinateur peut être un terminal à disposition de l'utilisateur. Le procédé est exécuté dans le cadre d'un service en ligne, accessible par exemple sur un site Web, ce qui lui évite de dépendre de la variété des navigateurs Web dont peuvent être équipés les utilisateurs.

Un autre aspect de la présente invention se rapporte à un serveur pour l'agrégation et la visualisation d'informations accessibles sur des sites par l'intermédiaire d'un réseau de télécommunications, tel que défini dans la revendication 8.

D'autres particularités et avantages de la présente invention apparaîtront dans la description ci-après d'exemples de réalisation non limitatifs, en référence aux dessins annexés, dans lesquels :
- la figure 1 est un schéma synoptique illustrant la phase de configuration dans une réalisation du procédé selon l'invention;
- la figure 2 est un schéma synoptique illustrant une opération de structuration graphique intervenant dans cette phase de configuration; et
- la figure 3 est un schéma synoptique illustrant l'extraction des données et la construction de la page personnalisée d'un utilisateur.

L'invention est décrite ci-après dans son application à un service d'agrégation et de visualisation d'informations extraites de plusieurs pages Web. Le mode de réalisation décrit repose sur un site Web qui implémente la fonctionnalité. On remarquera cependant que cette réalisation n'est pas la seule possible et qu'en particulier la fonctionnalité pourrait être offerte localement par un module logiciel s'exécutant sur l'ordinateur d'un utilisateur.

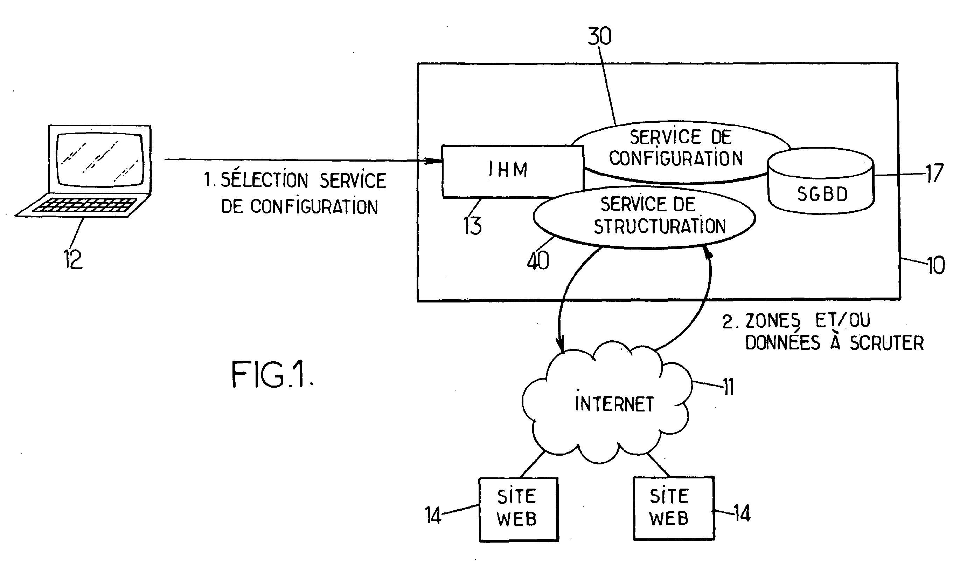

La figure 1 montre un serveur 10 relié à l'Internet 11, qui héberge le site Web précité. Des terminaux d'utilisateurs 12 communiquent avec ce serveur 10, notamment à travers le réseau Internet 11. Ces terminaux, pouvant être de nature diverse, incluent un logiciel de navigation pour accéder à l'interface homme-machine (IHM) 13 du serveur Web.

Cette interface homme-machine 13 inclut typiquement une page d'accueil du service au format HTML, qui présente:
- une zone de visualisation (partie de la page, frame, ...) des données extraites d'un ou plusieurs autres sites Internet, et agrégées; et
- un élément cliquable (lien, bouton, ...) donnant accès à une page permettant la configuration, par l'utilisateur final, de cette zone de visualisation.

La zone de visualisation peut être matérialisée, pour l'utilisateur, par un encadrement, une couleur distincte, etc. Techniquement, il peut par exemple s'agir d'un tableau HTML ou d'un calque.

La procédure de configuration permet à chaque utilisateur de spécifier les données qu'il souhaite voir agrégées dans la zone de visualisation, ce qui personnalise la page HTML pour cet utilisateur. Lorsqu'il se connecte au site, celui-ci va chercher les informations spécifiées et lui présente les informations souhaitées, actualisées, dans la zone de visualisation.

La sélection par l'utilisateur, à la souris, de l'élément cliquable, lui donne accès au service de configuration 30 (étape 1 sur la figure 1), qui lui présente un formulaire ayant des champs pour qu'il fournisse l'ensemble des renseignements utiles, en particulier:
- les zones ou données contenues dans des pages Web qui l'intéressent, à consulter pour insertion dans la zone de visualisation;
- les éventuels attributs de présentation des données extraites à l'intérieur de la zone de visualisation (couleurs, polices de caractères, taille, etc.). Un jeu d'attributs par défaut est prévu dans le cas où l'utilisateur ne spécifie rien.

La saisie des zones d'où extraire les informations se fait avantageusement de façon graphique par l'utilisateur.

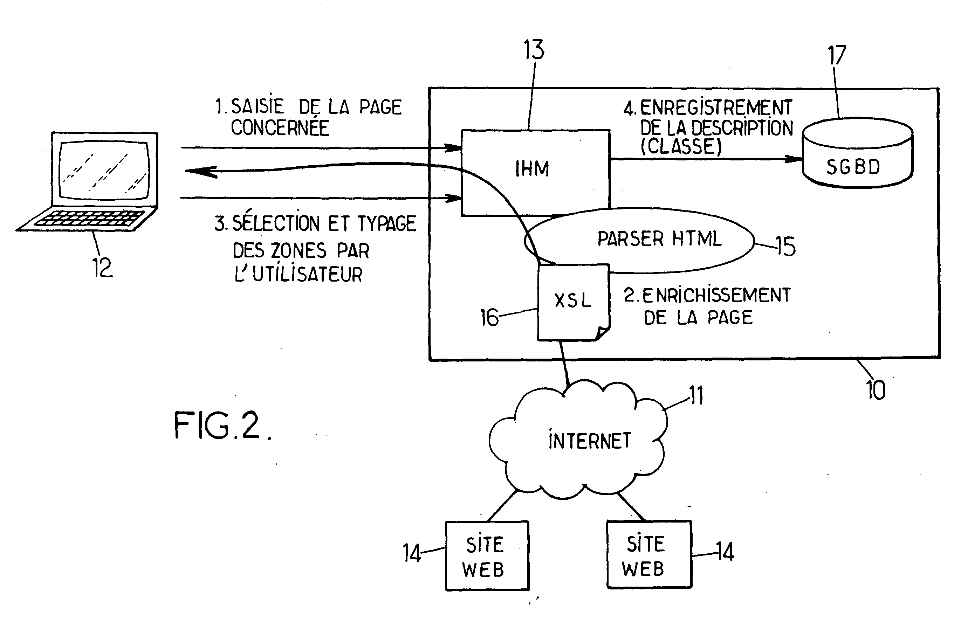

Dans le mode de réalisation illustré par la figure 2, un champ du formulaire est destiné à recevoir une adresse d'une page Web accessible sur un site 14 d'où l'utilisateur souhaiterait que les informations qui l'intéressent soient extraites. Cette adresse peut être fournie sous forme d'URL. La validation de cette adresse active un service de structuration graphique 40 dont le fonctionnement est illustré par la figure 2.

Le serveur 10 consulte la page Web ayant l'adresse indiquée, qu'il récupère de façon classique par une requête HTTP, et il l'analyse pour l'enrichir d'éléments graphiques de sélection de zones. Cette analyse de la page HTML ("parsing") est effectuée par le module 15 de la figure 2 (parser HTML) à l'aide d'une feuille de style 16 établie selon le langage XSL ("XML Stylesheet Language").

Les langages XSL et XML ("eXtended Markup Language") sont bien connus de l'homme du métier. Les feuilles de style XSL se composent de règles permettant de sélectionner des éléments d'un document XML ou HTML et de leur appliquer des attributs de formatage. Dans le cas présent, la feuille de style 16 contrôle le module de parsing HTML 15 pour qu'il repère les zones de présentation de données dans la page indiquée par l'utilisateur et associe à chacune de ses zones:
- un identifiant unique de zone;
- des éléments graphiques supplémentaires, tels que par exemple une couleur spécifique de fond et/ou de caractères, permettant à l'utilisateur de visualiser qu'il s'agit d'une zone sélectionnable lorsque la page est affichée;
- un formulaire destiné à recevoir les données de classification de l'utilisateur, notamment le type de zone. Le typage peut être proposé via une liste de choix incluse dans le formulaire, ou laissé complètement libre à l'utilisateur.

Une fois que l'analyse de la page est achevée, le serveur 10 transmet la page enrichie au terminal 12 de l'utilisateur pour affichage.

L'utilisateur est invité à sélectionner successivement, par exemple à la souris, les zones qui l'intéressent. La sélection d'une zone provoque l'affichage du formulaire transmis dans la page enrichie (ce formulaire ne s'affiche que sur sélection de la zone correspondante). A l'aide de ce formulaire, l'utilisateur saisit, ou choisit dans une liste, les données de classification pertinentes, qui peuvent se limiter au type de zone, puis valide son choix.

Suite au typage d'une zone, les zones "équivalentes" de la page, c'est-à-dire celles qui contiennent d'autres occurrences d'un même type d'information (par exemple plusieurs occurrences d'un titre dans une liste d'articles) sont repérées automatiquement sur la base de similitudes de structuration HTML (par exemple marqueurs identiques). Si l'utilisateur sélectionne l'une de ces zones équivalentes, il peut constater dans le formulaire qui s'affiche que ces zones ont été typées de la même façon.

Un bouton de soumission est inclus dans la page enrichie pour que l'utilisateur le clique une fois qu'il a terminé de sélectionner les zones qui l'intéressent et de fournir les données de classification s'y rapportant. L'activation de ce bouton provoque l'envoi au serveur 10 des formulaires remplis pour les zones qui ont été sélectionnées (étape 3 sur la figure 2). La sélection des sites et des zones et la fourniture des données de classification sont répétées par l'utilisateur pour chaque élément d'information qui l'intéresse. Le serveur 10 enregistre alors, dans une base de données 17 dont il dispose, une description des données de classification fournies par l'utilisateur et les identifiants des zones de présentation correspondantes (étape 4). L'URL de la page d'origine est également conservée dans la base de données 17. La conservation de ces données est naturellement effectuée en relation avec l'identifiant de l'utilisateur.

Dans une réalisation préférée, le serveur enregistre de manière persistante l'association page/identifiant de zone/typage une seule fois pour un ensemble de zones équivalentes. L'identifiant de zone enregistré permet alors de repérer n'importe quel élément d'un ensemble de zones équivalentes. Ce typage revient à stocker de façon persistante la description de zones équivalentes, se trouvant sur une page Web. En d'autres termes, on enregistre une classe d'objets, et les données contenues dans les zones sont alors des instanciations de cette classe.

La base de données 17 sauvegarde l'ensemble des informations fournies par l'utilisateur (zones à consulter et données de classification associées, le cas échéant attributs de présentation, etc.) en liaison avec l'identifiant de cet utilisateur, afin de permettre leur utilisation future par les autres éléments du système.

Une fois la configuration réalisée, la zone de visualisation permet à l'utilisateur de consulter les données extraites et agrégées, issues du ou des sites Web choisis.

Cette zone contient également, pour chaque ensemble de données extraites, le rappel du nom ou l'adresse du site d'où proviennent ces données. Cet élément est cliquable, et permet l'accès au site en question.

Dans une réalisation du procédé, lorsque l'utilisateur accède à la page d'accueil du site dans le cadre d'une nouvelle connexion, en saisissant l'URL de cette page, le serveur 10 détecte de quel utilisateur il s'agit et récupère les données de son profil d'utilisateur, qui incluent les URL des pages Web et la définition des zones de ces pages d'où des données sont à extraire. Il procède alors à l'extraction de ces données pour les incorporer à la zone de visualisation de la page d'accueil qui sera retournée à l'utilisateur. Pour la détection d'une nouvelle connexion d'un utilisateur, un procédé classique à base de cookie peut être employé. L'identifiant utilisateur véhiculé par le cookie est enregistré dans la base de données 17, associé aux données issues de la sélection interactive.

L'extraction des données des sites Web 14 peut aussi résulter d'une commande entrée par l'utilisateur, par exemple en cliquant sur un bouton de rafraîchissement.

Les éléments initialement cliquables issus des données extraites le sont également lorsqu'ils sont affichés dans la zone de visualisation, et donnent accès, en substitution de la page de visualisation, ou dans une nouvelle page, à la page pointée initialement.

En option, les données extraites peuvent être affichées selon la charte graphique du site 10 offrant la fonctionnalité d'extraction et d'agrégation. Par défaut, les données apparaissent selon la charte graphique du site d'où elles sont issues.

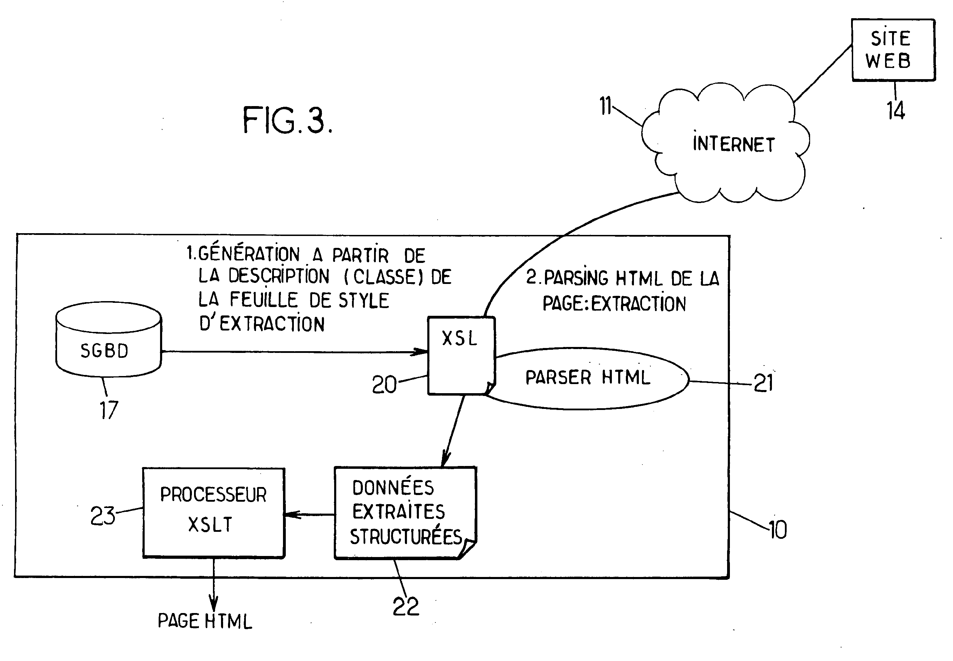

Les données (objets) sont extraites de chaque page concernée à partir de la description de zone (ou de classe) préalablement enregistrée. Ces données ont pu avoir été mises à jour en termes de contenu. Un mode d'implémentation du service d'extraction peut être le suivant (figure 3):
- à partir de la description récupérée dans la base de données 17 pour l'utilisateur, une feuille de style XSL 20 est générée;
- à l'aide d'un module de parsing HTML 21, la feuille de style 20 est appliquée à la page HTML concernée, téléchargée de nouveau depuis le site Web 14, afin d'extraire les informations qui se trouvent actuellement dans les zones qui ont été sélectionnées par l'utilisateur;
- le résultat du parsing est un flot structuré des données extraites, formant un document 22 avantageusement construit en langage XML.

Ce document 22 contient typiquement les données extraites en relation avec les types de zones et leurs identifiants. Les données issues de zones équivalentes peuvent être marquées comme telles.

Les documents XML 22 ainsi obtenus sont traités par un processeur XSLT 23 pour construire la page d'accueil à retourner par le serveur 10, avec sa zone de visualisation personnalisée.

## Revendications

1. Procédé de visualisation d'informations accessibles sur au moins un site par l'intermédiaire d'un réseau de télécommunications, comprenant:
- une phase de configuration dans laquelle un utilisateur fournit des données d'identification et des données de spécification de zones de sites sélectionnés par l'utilisateur;
- une phase d'extraction dans laquelle les zones de sites spécifiées sont consultées par l'intermédiaire du réseau pour extraire les informations contenues dans ces zones; et
- une phase de construction d'une zone de visualisation dans une page associée à l'utilisateur, où sont affichées les informations extraites, la page associée à l'utilisateur étant hébergée par un serveur (10) auquel l'utilisateur accède par l'intermédiaire dudit réseau de télécommunications (11).

2. Procédé selon la revendication 1, dans lequel la page associée à l'utilisateur inclut un élément sélectionnable pour déclencher la phase de configuration.

3. Procédé selon l'une quelconque des revendications précédentes, dans lequel la page associée à l'utilisateur inclut, pour au moins certaines des informations affichées, un lien vers le site d'où ont été extraites ces informations.

4. Procédé selon l'une quelconque des revendications précédentes, dans lequel on enregistre une identification des zones de sites spécifiées par l'utilisateur afin qu'une phase d'extraction ultérieure puisse être accomplie sans nouvelle phase de configuration.

5. Procédé selon la revendication 4, dans lequel la phase d'extraction ultérieure est déclenchée en réponse à un accès de l'utilisateur à sa page associée.

6. Procédé selon l'une quelconque des revendications précédentes, dans lequel la phase de configuration comprend une structuration graphique d'informations incluant les étapes suivantes:
- analyse d'une page disponible sur un site (14) pour repérer au moins une zone de présentation de données dans ladite page, et pour construire une page enrichie dans laquelle chaque zone de présentation repérée est associée à un identifiant de zone, à des éléments graphiques de sélection et à un formulaire;
- affichage de la page enrichie sur un terminal (12) de l'utilisateur et, en réponse à la sélection par l'utilisateur d'une zone repérée de la page, présentation sur le terminal du formulaire associé à la zone sélectionnée pour l'entrée de données de classification par l'utilisateur en relation avec la zone sélectionnée; et
- enregistrement pour l'utilisateur de paramètres représentant une correspondance entre les données de classification entrées par l'utilisateur en relation avec chaque zone sélectionnée et l'identifiant de ladite zone sélectionnée.

7. Procédé selon la revendication 6, dans lequel la phase d'extraction comprend les étapes suivantes:
- accès à la page sur le site (14);
- analyse de la page à partir des identifiants de zone en organisant les informations apparaissant dans les zones sélectionnées par l'utilisateur conformément aux données de classification entrées par l'utilisateur en relation avec lesdites zones; et
- construction de la zone de visualisation dans la page associée à l'utilisateur, contenant les informations ainsi organisées.

8. Serveur (10) pour l'agrégation et la visualisation d'informations accessibles sur des sites (14) par l'intermédiaire d'un réseau de télécommunications (11), comprenant une interface réseau pour l'accès aux sites, des moyens de configuration (30) pour obtenir d'un utilisateur des données de spécification de zones de sites sélectionnés par l'utilisateur, des moyens (20) d'extraction d'informations dans les zones de sites spécifiées par l'utilisateur, et des moyens de construction d'une zone de visualisation dans une page associée à l'utilisateur, où sont affichées les informations extraites.

9. Serveur selon la revendication 8, dans lequel les , moyens de configuration (30) sont agencés pour obtenir et enregistrer des données d'identification et les données de spécification fournies par chaque utilisateur.

10. Serveur selon la revendication 8 ou 9, dans lequel les moyens de configuration comprennent des moyens (40) de structuration graphique d'informations incluant:
- des moyens (15) d'analyse d'une page disponible sur le site (14) pour repérer au moins une zone de présentation de données dans ladite page, et pour construire une page enrichie dans laquelle chaque zone de présentation repérée est associée à un identifiant de zone, à des éléments graphiques de sélection et à un formulaire;
- des moyens (13) de transmission de la page enrichie à un terminal (12) de l'utilisateur et de récupération de données de classification entrées par l'utilisateur en relation avec au moins une zone sélectionnée parmi les zones de présentation repérées dans la page enrichie; et
- des moyens (17) d'enregistrement pour l'utilisateur de paramètres représentant une correspondance entre les données de classification entrées par l'utilisateur en relation avec chaque zone sélectionnée et l'identifiant de ladite zone sélectionnée.

11. Serveur selon la revendication 10, dans lequel les moyens d'extraction comprennent des moyens pour accéder à la page sur le site après enregistrement des paramètres pour l'utilisateur, des moyens (21) d'analyse de la page à partir des identifiants de zone en organisant les informations apparaissant dans les zones sélectionnées par l'utilisateur conformément aux données de classification entrées par l'utilisateur en relation avec lesdites zones, et des moyens de construction de la zone de visualisation dans la page associée à l'utilisateur, contenant les informations ainsi organisées.

12. Programme d'ordinateur à installer dans un ordinateur (10) raccordable à un réseau de télécommunications (11), comprenant des instructions pour mettre en oeuvre un procédé selon l'une quelconque des revendications 1 à 7 lors d'une exécution du programme par des moyens de traitement dudit ordinateur.
